# EUROPEAN PATENT APPLICATION

(11) **EP 4 679 160 A1**
(43) Date of publication of application: **14.01.2026**
(21) Application number: 24865606.8
(22) Date of filing: 02.05.2024
(51) Int. Cl.: G02B 27/00, G06F 3/01, G02B 27/28, G02B 27/10, G02B 27/01

(54) **ELECTRONIC DEVICE AND METHOD FOR GAZE TRACKING**

(30) Priority: 14.09.2023 KR 20230122672
(71) Applicant: Samsung Electronics Co., Ltd., Suwon-si, Gyeonggi-do 16677 (KR)
(72) Inventor: KOO, Bonkon, Suwon-si, Gyeonggi-do 16677 (KR); LEE, Kyookeun, Suwon-si, Gyeonggi-do 16677 (KR); KIM, Doyoun, Suwon-si, Gyeonggi-do 16677 (KR); SHIN, Sunghwan, Suwon-si, Gyeonggi-do 16677 (KR); CHOI, Jongchul, Suwon-si, Gyeonggi-do 16677 (KR)
(74) Representative: Appleyard Lees IP LLP
(86) International application number: PCT/KR2024/005925
(87) International publication number: WO 2025/058161

(57) **Abstract**

Provided are an electronic device for eye tracking, and a method of operating the electronic device. The electronic device generates a plurality of light beams through a polarization filter and a polarization change element, or a plurality of light sources, and obtains a coded image through a metalens configured to refract the generated plurality of light beams into different paths. The electronic device obtains gaze information of a user, based on the coded image, and track the gage of the user.

## Description

### TECHNICAL FIELD

The disclosure relates to an electronic device for eye tracking, and a method of operating the same. More particularly, the disclosure relates to an electronic device for tracking a gaze, based on an eye image distorted by being transmitted through a multiplexed-metalens that refracts incident light into different paths according to optical properties, and a method of operating the electronic device.

### BACKGROUND ART

Augmented reality is a technology that overlays a virtual image on a physical environment space or a real world object in the real world to display them together, and an augmented reality device (e.g., smart glasses) using an augmented reality technology is used in everyday life, such as for an information search, providing directions, and photography.

In particular, with the development of an image sensor and artificial intelligence-based image processing technology, the use of a camera has expanded from simple photography to object recognition, biometrics, and information collection. Pixel resolution of cameras is continuously increasing according to various uses, but there is a physical limitation on reducing a size and cost of a camera module.

Recently, a lensless imaging technique of replacing a lens with a thin phase mask is receiving attention. The phase mask is a very thin optical element for modulating a phase of incident light, and the lensless imaging technique is a scheme for photographing an object by using the thin phase mask that modulates light, instead of a lens. A thickness and a focal length of a lens module may be reduced through the lensless imaging technique, and thus it is possible to manufacture an ultra-thin camera that exceeds a physical limitation of an existing camera.

In the lensless imaging technique, the most important element that determines the performance of a camera is a structure of a phase mask. Structures of fine curves may be differently designed for phase masks. In a metalens, which is a type of phase mask, a finely curved structure may be designed by arranging relatively small nanostructures in a two-dimensional (2D) manner. In particular, a multiplexed-metalens may be used to provide various focal lengths within one lens or to process light of various wavelengths, and such a device may be helpful in miniaturizing camera modules and improving their durability.

### DISCLOSURE OF INVENTION

### SOLUTION TO PROBLEM

According to an aspect of the disclosure, an electronic device includes: a polarization filter configured to receive incident light and to change a polarization of the incident light; a polarization change element configured to receive light from the polarization filter; a metalens configured to refract light received from the polarization change element into different paths according to a polarization direction of the light received from the polarization change element; an image sensor configured to receive the refracted light from the metalens; at least one processor; and at least one memory storing at least one instruction that, when executed by the at least one processor, cause the electronic device to: cause the polarization filter to change the incident light to a first polarized light of a first direction and to transmit the first polarized light, obtain, through the image sensor, a first coded image based on the first polarized light, wherein the first polarized light is refracted into a first path by the metalens, and based on identifying that gaze information of a user may not be obtained from the first coded image: cause the polarization change element to change the first polarized light to a second polarized light of a second direction and transmit the second polarized light, obtain, through the image sensor, a second coded image based on the second polarized light, wherein the second polarized light is refracted into a second path by the metalens, and obtain the gaze information of the user from the second coded image.

According to an aspect of the disclosure, an electronic device includes: a first light source configured to output a first light; a second light source configured to output a second light; a metalens configured to refract incident light into different paths according to a wavelength of the incident light; an image sensor configured to receive light refracted by the metalens; at least one processor; and at least one memory storing at least one instruction that, when executed by the at least one processor, cause the electronic device to: obtain, through the image sensor, a first coded image, wherein the first coded image is based on the first light refracted into a first path by the metalens, and based on identifying that gaze information of a user may not be obtained from the first coded image, obtain gaze information of the user from a second coded image obtained through the image sensor, wherein the second coded image is based on the second light refracted into a second path by the metalens.

According to an aspect of the disclosure, a method includes: obtaining a first coded image by receiving first polarized light refracted into a first path by a metalens, wherein the metalens is configured to refract incident light into different paths according to a polarization direction of the incident light; identifying whether gaze information of a user may be obtained from the first coded image; based on identifying that the gaze information of the user may not be obtained from the first coded image: obtaining a second coded image by receiving second polarized light refracted into a second path by the metalens; and obtaining the gaze information of the user from the second coded image.

### BRIEF DESCRIPTION OF DRAWINGS

This disclosure may be readily understood by reference to the following detailed description and the accompanying drawings, in which reference numerals refer to structural elements.
FIG. 1 is a conceptual diagram illustrating an operation, performed by an electronic device, of tracking a gaze, based on a coded image obtained by receiving light transmitted by a multiplexed metalens, according to an embodiment of the disclosure;
FIG. 2 is a conceptual diagram illustrating a process, performed by an electronic device, of tracking a gaze, based on a coded image, according to an embodiment of the disclosure;
FIG. 3 is a flowchart of an operation method of an electronic device according to an embodiment of the disclosure;
FIG. 4 is a flowchart of an operation method of an electronic device according to an embodiment of the disclosure;
FIG. 5 is a flowchart of an operation method of an electronic device according to an embodiment of the disclosure;
FIG. 6 is a conceptual diagram illustrating an operation, performed by an electronic device, of tracking a gaze, based on a coded image obtained by receiving light generated using a light source and a multiplexed metalens, according to an embodiment of the disclosure;
FIG. 7 is a conceptual diagram illustrating an operation, performed by an electronic device, of tracking a gaze, based on a coded image obtained by receiving at least one of a plurality of light beams generated using a plurality of light sources and a plurality of multiplexed metalenses, according to an embodiment of the disclosure;
FIG. 8 is a flowchart of a method, performed by an electronic device, of tracking a gaze, based on a plurality of light beams generated using a plurality of light sources and a multiplexed metalens, according to an embodiment of the disclosure;
FIG. 9 is a conceptual diagram illustrating an operation, performed by an electronic device, of tracking a gaze, based on a coded image obtained by receiving light output by a plurality of light sources, according to an embodiment of the disclosure;
FIG. 10A is a conceptual diagram for explaining an operation in which first light of a first wavelength output by a light source is focused on an image sensor;
FIG. 10B is a conceptual diagram for explaining an operation in which second light of a second wavelength output by a light source is focused on an image sensor;
FIG. 11 is a flowchart of a method, performed by an electronic device, of tracking a gaze by extracting a feature point, based on a coded image, according to an embodiment of the disclosure;
FIG. 12 is a flowchart of a method, performed by an electronic device, of tracking a gaze by restoring an image, based on a coded image, according to an embodiment of the disclosure; and
FIG. 13 is a block diagram of a structure of an electronic device according to an embodiment of the disclosure,

### MODE FOR THE INVENTION

Although general terms widely used at present were selected for describing the disclosure in consideration of the functions thereof, these general terms may vary according to intentions of one of ordinary skill in the art, case precedents, the advent of new technologies, or the like. Terms arbitrarily selected by the applicant of the disclosure may also be used in a specific case. In this case, their meanings need to be given in the detailed description of an embodiment of the disclosure. Hence, the terms must be defined based on their meanings and the contents of the entire specification, not by simply stating the terms.

An expression used in the singular may encompass the expression of the plural, unless it has a clearly different meaning in the context. Unless otherwise defined, all terms (including technical and scientific terms) used herein have the same meaning as commonly understood by one of ordinary skill in the art to which this disclosure belongs.

The terms "comprises" and/or "comprising" or "includes" and/or "including" used herein specify the presence of stated elements, but do not preclude the presence or addition of one or more other elements. The terms "unit", "-er (-or)", and "module" when used in this specification refers to a unit in which at least one function or operation is performed, and may be implemented as hardware, software, or a combination of hardware and software.

The expression "configured to (or set to)" used therein may be used interchangeably with, for example, "suitable for", "having the capacity to", "designed to", "adapted to", "made to", or "capable of", according to situations. The expression "configured to (or set to)" may not only necessarily refer to "specifically designed to" in terms of hardware. Instead, in some situations, the expression "system configured to" may refer to a situation in which the system is "capable of" together with another device or component parts. For example, the phrase "a processor configured (or set) to perform A, B, and C" may refer to a dedicated processor (such as an embedded processor) for performing a corresponding operation, or a generic-purpose processor (such as a central processing unit (CPU) or an application processor (AP)) that can perform a corresponding operation by executing one or more software programs stored in a memory.

When an element (e.g., a first element) is "coupled to" or "connected to" another element (e.g., a second element), the first element may be directly coupled to or connected to the second element, or, unless otherwise described, a third element may exist therebetween.

Embodiments of the disclosure are described in detail herein with reference to the accompanying drawings so that this disclosure may be easily performed by one of ordinary skill in the art to which the disclosure pertains. The disclosure may, however, be embodied in many different forms and should not be construed as being limited to the examples set forth herein.

Embodiments of the disclosure now will be described more fully hereinafter with reference to the accompanying drawings.

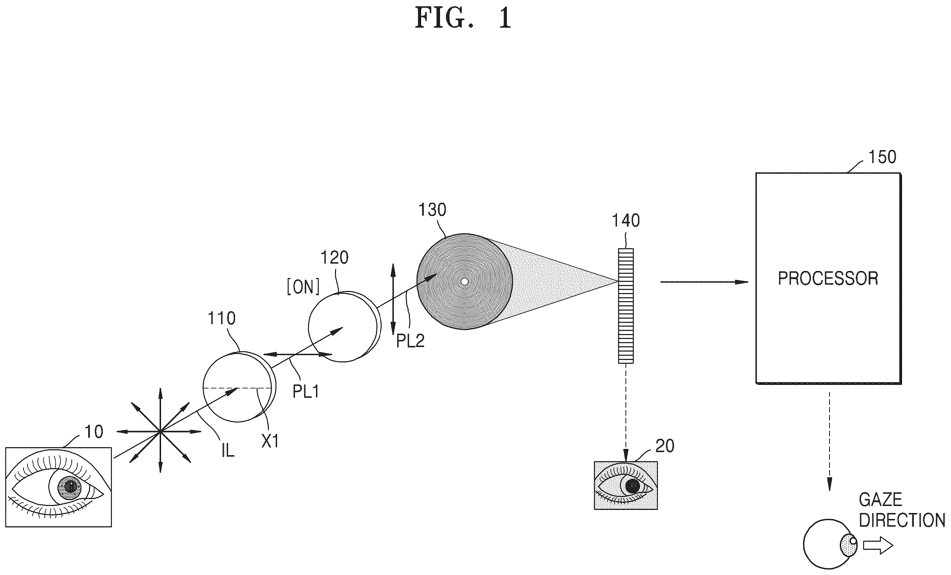

FIG. 1 is a conceptual diagram illustrating an operation, performed by an electronic device, of tracking a gaze, based on a coded image obtained by receiving light transmitted by a multiplexed metalens, according to an embodiment of the disclosure.

Referring to FIG. 1, the electronic device may include a polarization filter 110, a polarization change element 120, a multiplexed metalens 130, an image sensor 140, and a processor 150.

According to an embodiment of the disclosure, the polarization filter 110 may transmit only first polarized light PL1 having a specific polarization among external incident light IL. The polarization filter 110 may include a polarization axis X1 for polarizing the external incident light IL in a specific direction. The polarization filter 110 may transmit a light component vibrating in a direction along the polarization axis X1 among the external incident light IL, and may block light components vibrating in directions different from the direction along the polarization axis X1.

For example, the polarization filter 110 may transmit only polarized light having vertical polarization or only polarized light having horizontal polarization, among the external incident light IL. Polarized light with vertical polarization and polarized light with horizontal polarization may each be light polarized in a direction perpendicular to a direction in which the external incident light IL travels.

According to an embodiment of the disclosure, the external incident light IL may be light that vibrates in all directions perpendicular to the traveling direction of the external incident light IL, and may be, for example, natural light. The external incident light IL passes through the polarization filter 110, and the polarization filter 110 may generate the first polarized light PL1 of a horizontal direction by polarizing the incident light IL in the horizontal direction. Although FIG. 1 shows that only the first polarized light PL1 having horizontal polarization is transmitted by the polarization filter 110, the disclosure is not limited thereto.

According to an embodiment of the disclosure, the external incident light IL may be light reflected by an object 10. For example, the polarization filter 110 may transmit only polarized light having vertical polarization among incident light IL reflected by the object 10. For example, the object 10 may be an eye as shown in FIG. 1, and the processor 150 may track a gaze of a user, based on light reflected by the eye.

According to an embodiment of the disclosure, the polarization change element 120 may be configured to transmit the first polarized light PL1 of a first direction transmitted by the polarization filter 110 or change the first polarized light PL1 in the first direction into second polarized light PL2 of a second direction. The polarization change element 120 may change the phase of a traveling wave differently when linearly-polarized light is incident perpendicularly upon a plane. For example, the polarization change element 120 may generate the second polarized light PL2 having vertical polarization from the first polarized light PL1 having horizontal polarization. The polarization change element 120 may change the polarization form of incident light. The polarization change element 120 may transmit the first polarized light PL1 having horizontal polarization from the first polarized light PL1 having horizontal polarization, without changes.

When light linearly polarized in one direction is incident perpendicularly upon a front surface of the polarization change element 120, the polarization change element 120 may selectively generate first polarized light PL1 or second polarized light PL2 linearly polarized in the first or second direction. According to an embodiment of the disclosure, the first direction and the second direction may be perpendicular to each other.

However, the number of polarization directions of polarized light selectable by the polarization change element 120 is only an example, and the disclosure is not limited thereto. For example, the processor 150 may control the polarization change element 120 to selectively generate polarized light linearly-polarized in one of first through third directions.

According to an embodiment of the disclosure, the polarization change element 120 may be an element that changes the dirction of polarizing the incident light in response to an external influence, such as a mechanical force or electromagnetic field. According to an embodiment of the disclosure, the polarization change element 120 may include a polarization cell and a polarization direction controller. For example, the polarization cell may be a configuration in which light incident on the polarization change element 120 is transmitted and the polarization direction of the incident light is changed. The polarization cell may be a single layer of film, or may be a rectangular shaped box. For example, the polarization direction controller may apply a pressure to the polarization cell to control the polarization direction that the polarization cell changes with respect to incident light. The pressure may be a mechanical force, an electromagnetic field, or the like.

According to an embodiment of the disclosure, the second polarized light PL2 generated by the polarization change element 120 may be incident toward the multiplexed metalens 130. The incident light IL modified by the polarization filter 110 and the polarization change element 120, and the second polarized light PL2 generated by the polarization filter 110 and the polarization change element 120, may include information about the object 10.

According to an embodiment of the disclosure, the multiplexed-metalens 130 may be a lens in which nanostructures are arranged in a two dimensional (2D) manner. The multiplexed metalens 130 may be configured to modulate the phase of transmitted light. The multiplexed metalens 130 may change the path of light by modulating the phase of the transmitted light. A detailed arrangement shape of the nanostructures included in the multiplexed metalens 130 may vary according to an optical performance required by the multiplexed metalens 130.

According to an embodiment of the disclosure, a shape of each of the nanostructures included in the multiplexed metalens 130 may have a relatively strong reactivity to incident light having a specific optical property. The nanostructure included in the multiplexed metalens 130 may change the path or phase of the transmitted light by affecting the vibration form of the transmitted light. However, the principle of changing the path or phase of light does not limit the present disclosure.

For example, one shape of the nanostructure may have strong reactivity to incident light having a wavelength of 940 nm, and may change the incident light having a wavelength of 940nm so that the incident light may pass through the multiplexed metalens 130 and proceed in a specific direction. Alternatively, one shape of the nanostructure may modulate the incident light having the wavelength of 940nm so that the incident light may pass through the multiplexed metalens 130 and proceed in a specific phase. At the same time, one shape of the nanostructure may have strong reactivity to incident light having a wavelength of 850nm, and may change the incident light having a wavelength of 850nm so that the incident light may pass through the multiplexed metalens 130 and proceed in another direction.

According to an embodiment of the disclosure, the multiplexed metalens 130 may be a lens that changes transmitted light to proceed through different paths according to optical properties. When the multiplexed metalens 130 changes the transmitted light to proceed through different paths, the electronic device according to an embodiment of the disclosure may provide a camera module providing various focal lengths according to transmitted light, by using the multiplexed metalens 130.

For example, light having a first wavelength may be incident toward the multiplexed metalens 130, and the multiplexed metalens 130 may guide the light having the first wavelength to be focused at a first point on an imaging surface of the image sensor 140. Light having a second wavelength may be incident toward the multiplexed metalens 130, and the multiplexed metalens 130 may guide the light having the second wavelength to be focused at a second point on the imaging surface of the image sensor 140. The first point may be different from the second point. In other words, the multiplexed metalens 130 may change incident light beams to travel through different paths according to the wavelength of incident light, and may provide different focal distances according to the incident light.

As another example, the polarized light PL1 having vertical polarization may be incident toward the multiplexed metalens 130, and the multiplexed metalens 130 may guide the polarized light PL1 having vertical polarization to be focused at the first point on the imaging surface of the image sensor 140. Polarized light having horizontal polarization may be incident toward the multiplexed metalens 130, and the multiplexed metalens 130 may guide the polarized light having horizontal polarization to be focused at the second point on the imaging surface of the image sensor 140. The first point may be different from the second point. In other words, the multiplexed metalens 130 may change incident light beams to travel through different paths according to the polarization direction of incident light, and may provide different focal distances according to the incident light.

However, the multiplexed metalens 130 may change the incident light beams to proceed in different paths according to the optical properties of the incident light beams, and the wavelength and polarization direction described as examples of the optical properties are only examples and do not limit the present disclosure. According to an embodiment of the disclosure, the multiplexed metalens 130 may include a surface formed of nanostructures arranged on a substrate, and the path of transmitted light may be changed according to an arrangement of the nanostructures of the multiplexed metalens 130 and a shape of each of the nanostructures. For example, the characteristics of the multiplexed metalens 130 may vary according to the heights, shapes, arrangement, and properties of the nanostructures formed on the multiplexed metalens 130.

The nanostructures included in the multiplexed metalens 130 may guide polarized light incident on the multiplexed metalens 130 to an arbitrary focus according to an arrangement shape of the nanostructures. The "arrangement shape" refers to at least one of the size of each nanostructure, the shape thereof, an arrangement spacing thereof, a size distribution by position of the nanostructures with respect to an area where the multiplexed metalens 130 is located, a shape distribution by position thereof, or a spacing distribution by position thereof. A detailed arrangement shape of the nanostructures included in the multiplexed metalens 130 may vary according to an optical performance required by the multiplexed metalens 130. For example, the arrangement shape of the nanostructures may vary according to the wavelength band, focal length, and the like of the light desired to be collected through the multiplexed metalens 130.

According to an embodiment of the disclosure, the electronic device may obtain a coded image by receiving the second polarized light PL2 transmitted by the multiplexed metalens 130, by using the image sensor 140. The electronic device may obtain a coded image 20 corresponding to the object 10, based on the distribution of the second polarized light PL2 transmitted by the multiplexed metalens 130.

Light transmitted by the multiplexed metalens 130 is received by the image sensor 140. For example, the image sensor 140 may be a 2D sensor assembled in an array form including a plurality of pixels arranged in a matrix, and each of the plurality of pixels may include at least one photoelectric conversion element. The image sensor 140 may sense light by using a photoelectric conversion element, and output an image signal that is an electrical signal based on the sensed light. The electronic device may obtain the coded image 20 by converting the light received through the image sensor 140 into an electrical signal.

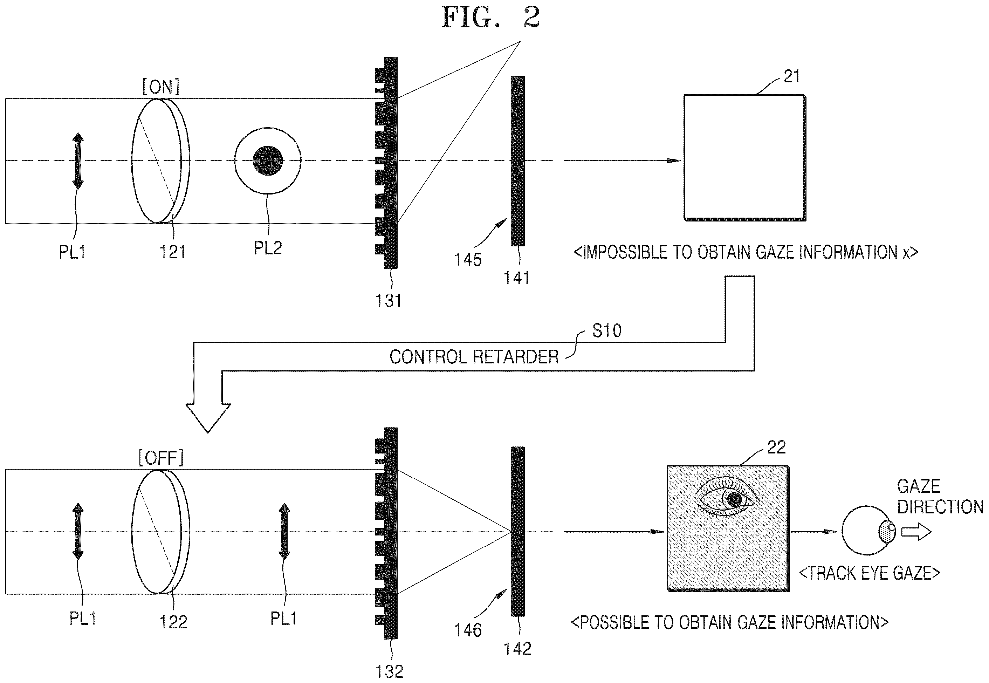

According to an embodiment of the disclosure, the multiplexed metalens 130 is configured to refract incident light through different paths according to optical properties. For example, light having vertical polarization may be guided to be transmitted by the multiplexed metalens 130 and be focused at the first point on the imaging surface of the image sensor 140. As another example, light having horizontal polarization may be guided to be transmitted by the multiplexed metalens 130 and be focused at the second point on the imaging surface of the image sensor 140. The electronic device may obtain the coded image 20 by converting the light received through each point on the imaging surface of the image sensor 140 into an electrical signal. This function of the multiplexed metalens 130 is easy to understand through FIG. 2.

The coded image 20 may vary according to at least one of the object 10 by which light is reflected, the arrangement shape of the nanostructures included in the multiplexed metalens 130, or the optical property of light refracted by the multiplexed metalens 130. In general, an object expressed in the coded image 20 phase-modulated by the multiplexed metalens 130 may be difficult to identify with the naked eye.

According to an embodiment of the disclosure, the electronic device may obtain gaze information of the user from the coded image 20, by using the processor 150. The electronic device may track a gaze direction of the user according to the gaze information of the user.

According to an embodiment of the disclosure, the electronic device may obtain a feature point from the coded image 20 by using the processor 150. The processor 150 may include an artificial intelligence (AI) algorithm or AI network for obtaining feature points. The AI algorithm included in the processor 150 may be an algorithm trained to extract feature points from a modulated image, that is, the coded image 20. The electronic device may track the gaze direction of the user based on feature points extracted using the AI algorithm.

For example, the feature points may include at least one of a pupil feature point or an eye glint feature point. The electronic device may extract at least one of the pupil feature point or the eye twinkle feature point from the coded image 20. The electronic device may track the gaze direction of the user, based on at least one of the pupil feature point or the eye glint feature point extracted using the AI algorithm.

According to an embodiment of the disclosure, the electronic device may restore an image from the coded image 20 by using the processor 150. The processor 150 may include an AI algorithm or AI network for restoring an image. The AI algorithm included in the processor 150 may be an algorithm trained to restore an image from a modulated image, that is, from the coded image 20. The electronic device may track the gaze direction of the user based on the image restored using the AI algorithm.

FIG. 2 is a conceptual diagram illustrating a process, performed by an electronic device, of tracking a gaze, based on a coded image, according to an embodiment of the disclosure.

For convenience of explanation, a repeated description of matters described above with reference to FIG. 1 will be given briefly or omitted. The first polarized light PL1 shown in FIG. 2 may be light reflected by an object, for example, an eye, and polarized by the polarization filter 110 of FIG. 1.

For reference, metalenses 131 and 132 shown in FIG. 2 may have the same configuration as the metalens 130 described above using FIG. 1. Image sensor 141 and 142 shown in FIG. 2 may have the same configuration as the image sensor 140 described above using FIG. 1.

According to an embodiment of the disclosure, the electronic device may generate a second polarized light PL2 having horizontal polarization from the first polarized light PL1 having vertical polarization by using a polarization change element 121. The generated second polarized light PL2 may be incident toward the multiplexed metalens 131. The electronic device may obtain a first coded image 21 by receiving, by using the image sensor 141, light transmitted by the multiplexed metalens 131. However, according to an embodiment of the disclosure, when the light transmitted by the multiplexed metalens 131 is focused outside an imaging surface 145 of the image sensor 141, according to the area of the image sensor 141, the obtained first coded image 21 may not include information about the object, for example, the eye. Accordingly, the electronic device may be unable to obtain gaze information, based on the obtained first coded image 21.

According to an embodiment of the disclosure, the electronic device may determine whether it is possible to obtain the gaze information of the user from the obtained first coded image 21. In operation S10, when it is impossible to obtain the user's gaze information from the obtained first coded image 21, the electronic device may control a polarization change element 122 to transmit the first polarized light PL1 having vertical polarization without changes.

According to an embodiment of the disclosure, the electronic device may control the polarization change element 122 to transmit the first polarized light PL1 having vertical polarization without changes. For example, the polarization change elements 121 and 122 may generate polarized lights PL1 and PL2 each having at least two optical properties from the first polarized light PL1 incident through an ON/OFF operation.

The transmitted first polarized light PL1 may be incident toward the multiplexed metalens 132. The electronic device may obtain a second coded image 22 by receiving, by using the image sensor 142, light transmitted by the multiplexed metalens 132. However, according to an embodiment of the disclosure, when the light transmitted by the multiplexed metalens 132 is focused on an imaging surface 146 of the image sensor 142, according to the area of the image sensor 142, the obtained second coded image 22 may not include information about the object, for example, the eye. Accordingly, the electronic device may obtain gaze information, based on the obtained second coded image 22.

The electronic device may obtain gaze information of the user from the second coded image 22. The electronic device may track the user's gaze, based on the second coded image 22.

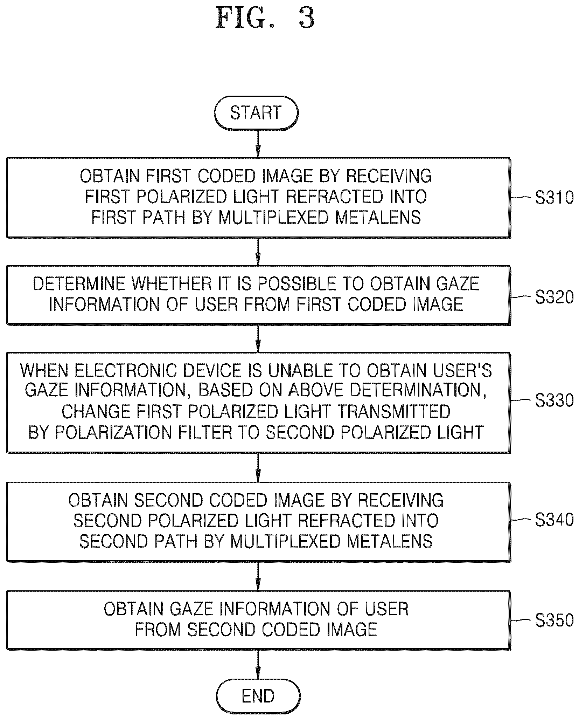

FIG. 3 is a flowchart of an operation method of an electronic device according to an embodiment of the disclosure.

In operation S310, the electronic device may obtain a first coded image by receiving first polarized light refracted in a first path by a multiplexed metalens.

According to an embodiment of the disclosure, the electronic device may generate, from external incident light, first polarized light that vibrates in one direction. The external incident light may be light reflected from an object, for example, from an eye. The external incident light may be light that vibrates in all directions perpendicular to a traveling direction of light. The electronic device may generate the first polarized light of one direction from the external incident light by allowing the external incident light to pass through a polarization filter. The polarization filter may be configured to transmit first polarized light of one direction from incident light.

According to an embodiment of the disclosure, the first polarized light in one direction may be light that vibrates in a direction perpendicular to the traveling direction. For example, the first polarized light in one direction may be a polarization component with horizontal polarization or a polarization component with vertical polarization.

According to an embodiment of the disclosure, the first polarized light in one direction generated by the polarization filter may be transmitted by a polarization changing device. The electronic device may change the polarization form of the first polarized light of one direction by using the polarization change element. The polarization change element may be configured to change the polarization form of the first polarized light transmitted by the polarization filter.

For example, the polarization change element may modulate the phase of a traveling wave when linearly-polarized light is incident perpendicularly upon a plane. The polarization change element may generate second polarized light having vertical polarization from the first polarized light in one direction. Alternatively, the polarization change element may transmit the first polarized light of one direction without changes.

According to an embodiment of the disclosure, a multiplexed metalens may be configured to refract incident light in different paths according to optical properties. For example, the multiplexed metalens may be configured to refract incident light in different paths according to a polarization direction of incident light. The multiplexed metalens may refract the first polarized light into a first path. The multiplexed metalens may refract the second polarized light into a second path.

The multiplexed metalens may be a lens in which nanostructures are arranged in a 2D manner. The multiplexed metalens may be configured to modulate the phase of transmitted light. The multiplexed metalens may change the path of light by modulating the phase of the transmitted light.

In particular, one shape of each of the nanostructures included in the multiplexed metalens may have a relatively strong reactivity to incident light having a specific optical property. The nanostructures included in the multiplexed metalens may change the path or phase of the transmitted light differently according to optical properties, by affecting the vibration form of the transmitted light.

According to an embodiment of the disclosure, the electronic device may use an image sensor to receive the first polarized light transmitted by the multiplexed metalens and traveling along a first path. The electronic device may obtain the first coded image by receiving the first polarized light. The electronic device may obtain the first coded image corresponding to the object, based on the distribution of the first polarized light transmitted by the multiplexed metalens.

The first coded image may vary according to at least one of the object by which light is reflected, the arrangement shape of the nanostructures included in the multiplexed metalens, or the optical property of light refracted by the multiplexed metalens. According to the arrangement shape of irregular nanostructures of the multiplexed metalens, the first coded image obtained by receiving the first polarized light transmitted by the multiplexed metalens may be difficult to identify with the naked eye.

In operation S320, the electronic device may determine whether it is possible to obtain the gaze information of the user from the first coded image.

For example, the first polarized light transmitted by the multiplexed metalens may form part of an image for the eye within the imaging plane of the image sensor. The electronic device may obtain the first coded image by receiving the first polarized light, and the electronic device may determine that obtainment of the user's gaze information is possible, based on the first coded image in which the image of the eye is normally formed.

As another example, the first polarized light transmitted by the multiplexed metalens may form part of an image for the eye outside the imaging plane of an image sensor. The electronic device may not be able to receive the first polarized light by using the image sensor, and the first coded image may not include information about the eye included in the first polarized light. The electronic device may determine that obtainment of the user's gaze information is possible, based on the first coded image in which the image of the eye is not normally formed.

In operation S330, when the electronic device is unable to obtain the user's gaze information, based on a determination as to whether it is possible to obtain the user's gaze information, the electronic device may change the first polarized light transmitted by the polarization filter to second polarized light.

The polarization change element may modulate the phase of a traveling wave when linearly-polarized light is incident perpendicularly upon a plane. The polarization change element may generate second polarized light having vertical polarization from the first polarized light of one direction. Alternatively, the polarization change element may transmit the first polarization in one direction without changes. When obtainment of the user's gaze information is impossible, the electronic device may generate the second polarized light from the first polarized light by using the polarization change element, in order to use the second polarized light.

Although it has been described above that the electronic device uses the first polarized light in operation S310 and the electronic device generates the second polarized light in operation S330, the order of utilization of the first polarized light and the second polarized light does not limit the present disclosure. For example, in operation S310, the electronic device may use the second polarized light, and, when the electronic device is unable to the user's gaze information by using the second polarized light, the electronic device may use the first polarized light as a lower priority.

In operation S340, the electronic device may obtain a second coded image by receiving second polarized light refracted in a second path by a multiplexed metalens. A repeated description of matters described above using operation S310 will be given briefly or omitted.

According to an embodiment of the disclosure, the electronic device may use an image sensor to receive the second polarized light transmitted by the multiplexed metalens. The electronic device may obtain the second coded image by receiving the second polarized light. The electronic device may obtain the second coded image corresponding to the object, based on the distribution of the second polarized light transmitted by the multiplexed metalens.

In operation S350, the electronic device may obtain the gaze information of the user from the second coded image.

According to an embodiment of the disclosure, the first polarized light and the second polarized light transmitted by the multiplexed metalens may proceed in different paths. The first polarized light and the second polarized light may be focused at different locations on the imaging plane of the image sensor. The electronic device may obtain the first coded image by receiving the first polarized light by using the image sensor, and may obtain the second coded image by receiving the second polarized light.

According to an embodiment of the disclosure, the first polarized light and the second polarized light may be focused at different locations inside and outside the imaging plane of the image sensor. For example, the first polarized light may be focused at a point outside the imaging plane of the image sensor. The second polarized light may be focused at a point within the imaging plane of the image sensor. The electronic device may obtain the first coded image by receiving the first polarized light, but may not obtain the user's gaze information based on the obtained first coded image. The electronic device may obtain the second coded image by receiving the second polarized light, and may obtain the user's gaze information based on the obtained second coded image.

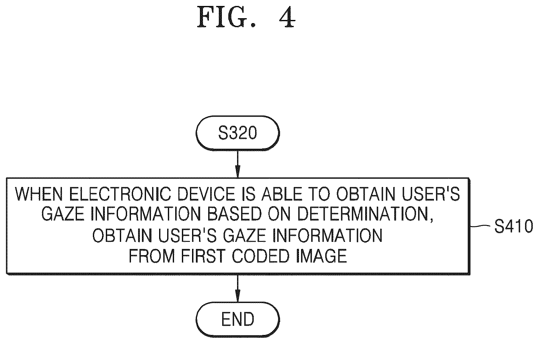

FIG. 4 is a flowchart of an operation method of an electronic device according to an embodiment of the disclosure.

For convenience of explanation, a repeated description of matters described above with reference to FIG. 3 will be given briefly or omitted.

Referring to FIG. 4, operation S410 may be performed after operation S320 of FIG. 3. According to an embodiment of the disclosure, in operation S320, the electronic device may determine whether it is possible to obtain the gaze information of the user. In operation S410, when the electronic device is able to obtain the user's gaze information based on determining that it is possible to obtain the user's gaze information, the electronic device may obtain the user's gaze information from the first coded image.

When it is possible to obtain the user's gaze information, the electronic device may obtain the user's gaze information from the first coded image, in operation S410.

When it is impossible to obtain the user's gaze information, the electronic device may generate the second polarized light, in operation S330. The electronic device may additionally perform operations S340 and S350 to obtain the user's gaze information from the second coded image obtained by receiving the second polarized light.

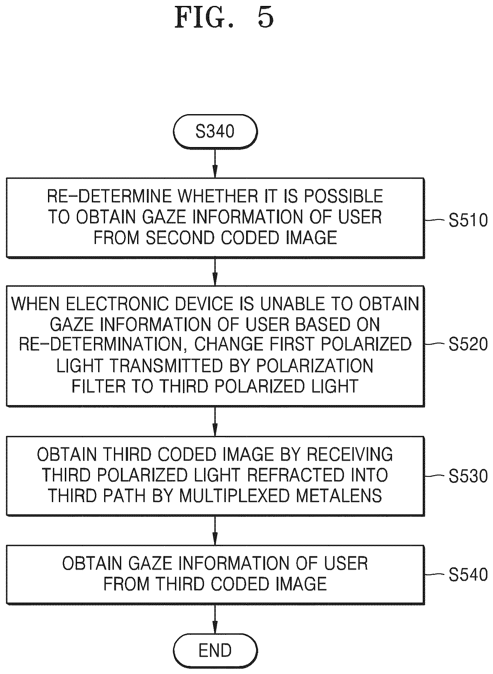

FIG. 5 is a flowchart of an operation method of an electronic device according to an embodiment of the disclosure.

For convenience of explanation, a repeated description of matters described above with reference to FIG. 3 will be given briefly or omitted.

Referring to FIG. 5, operation S510 may be performed after operation S340 of FIG. 3. In operation S510, the electronic device may re-determine whether it is possible to obtain the gaze information of the user from the second coded image. Operation S510 is omitted because it overlaps with what explained using operation S320.

In operation S520, when the electronic device is unable to obtain the user's gaze information based on a re-determination as to whether it is possible to obtain the user's gaze information, the electronic device may change the first polarized light transmitted by the polarization filter to third polarized light. The electronic device may generate the third polarized light. Operation S520 is explained briefly or omitted because it overlaps with what explained using operation S330.

According to an embodiment of the disclosure, the electronic device may generate the first polarized light from the external incident light by allowing the external incident light to pass through the polarization filter. The electronic device may change the polarization form of the first polarized light by using the polarization change element. The electronic device may transmit first polarized light in the first direction without changes or generate second polarized light of the second direction or third polarized light of the third direction, from the first polarized light, by using the polarization change element.

The third polarized light may be different from the first polarized light and the second polarized light. A vibration direction of the third polarized light may be different from each of a vibration direction of the first polarized light and a vibration direction of the second polarized light.

In operation S530, the electronic device may obtain a third coded image by receiving third polarized light refracted in a third path by a multiplexed metalens. Operation S530 is explained briefly or omitted because it overlaps with what explained using operations S310 and S340.

According to an embodiment of the disclosure, the electronic device may use an image sensor to receive the third polarized light transmitted by the multiplexed metalens. The electronic device may obtain the third coded image by receiving the third polarized light. The electronic device may obtain the third coded image corresponding to the object, based on the distribution of the third polarized light transmitted by the multiplexed metalens.

In operation S540, the electronic device may obtain the gaze information of the user from the third coded image. Operation S540 is explained briefly or omitted because it overlaps with what explained using operation S350.

According to an embodiment of the disclosure, the first polarized light, the second polarized light, and the third polarized light transmitted by the multiplexed metalens may proceed in different paths. The first polarized light, the second polarized light, and the third polarized light may be focused at different locations on the imaging plane of the image sensor. The electronic device may obtain the first coded image by receiving the first polarized light by using the image sensor, may obtain the second coded image by receiving the second polarized light, and may obtain the third coded image by receiving the third polarized light.

According to an embodiment of the disclosure, the first polarized light, the second polarized light, and the third polarized light may be focused at different locations inside and outside the imaging plane of the image sensor. For example, the first polarized light and the second polarized light may be focused at points outside the imaging plane of the image sensor. The third polarized light may be focused at a point within the imaging plane of the image sensor.

The electronic device may obtain the first coded image by receiving the first polarized light, but may not obtain the user's gaze information based on the obtained first coded image. The electronic device may obtain the second coded image by receiving the second polarized light, but may not obtain the user's gaze information based on the obtained second coded image. The electronic device may obtain the third coded image by receiving the third polarized light, and may obtain the user's gaze information based on the obtained third coded image.

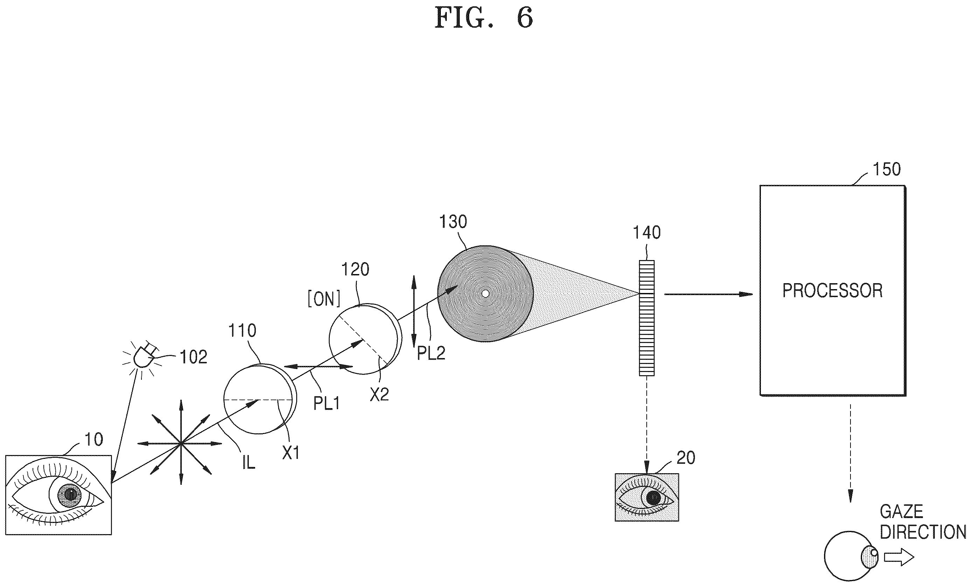

FIG. 6 is a conceptual diagram illustrating an operation, performed by an electronic device, of tracking a gaze, based on an coded image obtained by receiving light generated using a light source and a multiplexed metalens, according to an embodiment of the disclosure.

For convenience of explanation, a repeated description of matters described above with reference to FIG. 1 will be given briefly or omitted.

Referring to FIG. 6, according to an embodiment of the disclosure, the electronic device may further include a light source 102 that outputs light.

According to an embodiment of the disclosure, the light source 102 may output light. The light source 102 may output light toward an object 10. Light output by the light source 102 may be reflected by the object 10 located in front of a light modulation module including the polarization filter 110, the polarization change element 120, and the multiplexed metalens 130. Light reflected by the object 10 may be incident toward the polarization filter 110, and the polarization form of the incident light may be modified by the polarization filter 110. The incident light may be polarized by the polarization filter 110, the form of polarization may be changed by the polarization change element 120, and the path of light may be changed according to optical properties by the multiplexed metalens 130. For example, the path of light may change according to the wavelength or polarization direction of the light.

According to an embodiment of the disclosure, the light source 102 may output light according to a preset wavelength region. For example, the light source 102 may be an infrared light source, and the light source 102 may output light in an infrared band. As another example, the light source 102 may be an infrared light source, and the light source 102 may output light in an ultraviolet band.

According to an embodiment of the disclosure, the light source 102 may output light according to a wavelength region including a wavelength of 850nm or 940nm.

According to an embodiment of the disclosure, the light output by the light source 102 may be reflected by the object 10. The incident light IL incident toward the polarization filter 110 may be light output by the light source 102 and reflected by the object 10. The external incident light IL passes through the polarization filter 110, and the polarization filter 110 may generate the first polarization PL1 of a horizontal direction by polarizing the incident light IL in the horizontal direction. Although FIG. 1 shows that only the first polarized light PL1 having horizontal polarization is transmitted by the polarization filter 110, the polarization direction does not limit the present disclosure.

According to an embodiment of the disclosure, the first polarized light PL1 having horizontal polarization may be transmitted by the polarization change element 120. The electronic device may generate the second polarized light PL2 having vertical polarization from the first polarized light PL1 having horizontal polarization, by using the polarization change element 120. The second polarized light PL2 generated by the polarization change element 120 may be incident toward the multiplexed metalens 130.

According to an embodiment of the disclosure, the second polarized light PL2 may be transmitted by the multiplexed metalens 130. The electronic device may refract the transmitted second polarized light PL2 into different paths according to optical properties, by using the multiplexed metalens 130. The electronic device may change the path of the second polarized light PL2 by using the multiplexed metalens 130.

According to an embodiment of the disclosure, the electronic device may obtain a coded image by receiving the second polarized light PL2 transmitted by the multiplexed metalens 130, by using the image sensor 140. The electronic device may obtain a coded image 20 corresponding to the object 10, based on the distribution of the second polarized light PL2 transmitted by the multiplexed metalens 130.

According to an embodiment of the disclosure, the electronic device may obtain gaze information of the user from the coded image 20, by using the processor 150. The electronic device may track the gaze direction of the user according to the gaze information of the user.

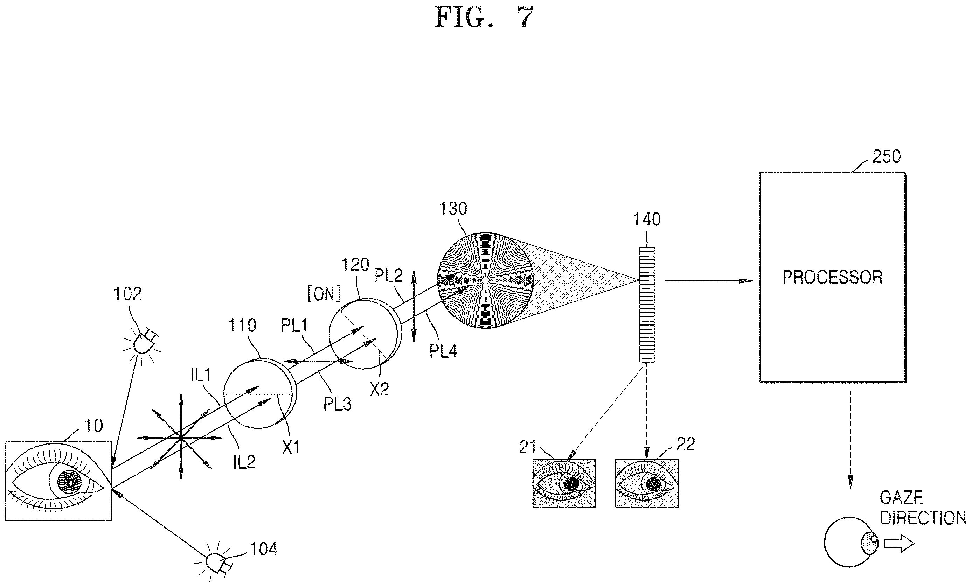

FIG. 7 is a conceptual diagram illustrating an operation, performed by an electronic device, of tracking a gaze, based on a coded image obtained by receiving at least one of a plurality of light beams generated using a plurality of light sources and a plurality of multiplexed metalenses, according to an embodiment of the disclosure.

For convenience of explanation, a repeated description of matters described above with reference to FIG. 6 will be given briefly or omitted.

Referring to FIG. 7, the electronic device may include a plurality of light sources. The electronic device may include a first light source 102 and a second light source 104. The first light source 102 may output first light. The second light source 104 may output second light. The wavelength region of the first light and the wavelength region of the second light may be different from each other.

According to an embodiment of the disclosure, the first light source 102 may output the first light. The first light source 102 may output the first light toward the object 10. The first light output by the first light source 102 may be reflected by the object 10 located in front of a light modulation module including the polarization filter 110, the polarization change element 120, and the multiplexed metalens 130.

According to an embodiment of the disclosure, the first light reflected by the object 10 may be incident toward the polarization filter 110. In FIG. 7, the first light incident toward the polarization filter 110 may be first incident light IL1. The first light may be transmitted by the polarization filter 110, and the electronic device may generate horizontal polarization by polarizing the first light of the horizontal direction by using the polarization filter 110. The first light polarized in the horizontal direction may be the first polarized light PL1.

According to an embodiment of the disclosure, the first polarized light PL1 may be transmitted by the polarization change element 120. The electronic device may generate the second polarized light PL2 having vertical polarization from the first polarized light PL1 by using the polarization change element 120. The second polarized light PL2 generated by the polarization change element 120 may be incident toward the multiplexed metalens 130.

The polarization change element 120 may transmit the first polarized light PL1 without changes, or may change the first polarized light PL1 into the second polarized light PL2. Although FIG. 7 has been described above based on the changed second polarized light PL2, a coded image may be obtained based on the first polarized light PL1 transmitted without changes.

When light linearly polarized in one direction is incident perpendicularly upon a front surface of the polarization change element 120, the polarization change element 120 may selectively generate polarized light linearly polarized in the first or second direction. In FIG. 7, the second polarized light PL2 having vertical polarization is generated. However, the second polarized light PL2 may have horizontal polarization, and the electronic device may control the polarization change element 120 to transmit the first polarized light PL1 having vertical polarization or horizontal polarization without changes.

According to an embodiment of the disclosure, the second polarized light PL2 may be transmitted by the multiplexed metalens 130. The electronic device may refract the transmitted second polarized light PL2 into different paths according to optical properties, by using the multiplexed metalens 130. The electronic device may change the path of the second polarized light PL2 by using the multiplexed metalens 130.

According to an embodiment of the disclosure, the electronic device may obtain a first coded image by receiving the second polarized light PL2 transmitted by the multiplexed metalens 130, by using the image sensor 140. The electronic device may obtain a first coded image 21 corresponding to the object 10, based on the distribution of the second polarized light PL2 transmitted by the multiplexed metalens 130.

According to an embodiment of the disclosure, the electronic device may obtain gaze information of the user from the first coded image 21, by using the processor 150. The electronic device may track the gaze direction of the user according to the gaze information of the user.

According to an embodiment of the disclosure, the second light source 104 may output the second light. The second light source 104 may output the second light toward the object 10. The electronic device may obtain a second coded image 22 by receiving the second light transmitted by the polarization filter 110, the polarization change element 120, and the multiplexed metalens 130. A method, performed by the electronic device, of obtaining the second coded image 22 by using the second light is the same as the method of obtaining the first coded image 21 by using the first light, and thus a description thereof will be omitted.

According to an embodiment of the disclosure, the electronic device may obtain gaze information of the user from the second coded image 22 by using the processor 150. The electronic device may track the gaze direction of the user according to the gaze information of the user.

According to an embodiment of the disclosure, the electronic device may obtain the gaze information of the user from the first coded image 21 or the second coded image 22 by using the processor 150. The electronic device may track the gaze direction of the user according to the gaze information of the user.

For example, the electronic device may determine whether it is possible to obtain the gaze information of the user from the first coded image 21. When the electronic device is able to obtain the gaze information of the use from the first coded image 21, the electronic device may track the gaze direction of the user by using the first coded image 21. When the electronic device is unable to obtain the gaze information of the user from the first coded image 21, the electronic device may output the second light by using the second light source 104, and may obtain the second coded image 22, based on the output second light. The electronic device may track the gaze direction of the user from the second coded image 22.

The electronic device may re-determine whether it is possible to obtain the gaze information of the user from the second coded image 22. When the electronic device is able to obtain the gaze information of the user from the second coded image 22, the electronic device may track the gaze direction of the user by using the second coded image 22. When the electronic device is unable to obtain the gaze information of the user from the second coded image 22, the electronic device may output third light by using another light source, and may obtain a third coded image, based on the output third light. The electronic device may track the gaze direction of the user from the third coded image.

The electronic device may include three or more light sources, and may repeat an operation of generating a plurality of coded images based on a plurality of light beams so that a coded image capable of obtaining the gaze information of the user may be obtained. The number of light sources and the degree of delay of light classified by the polarization change element do not limit the present disclosure.

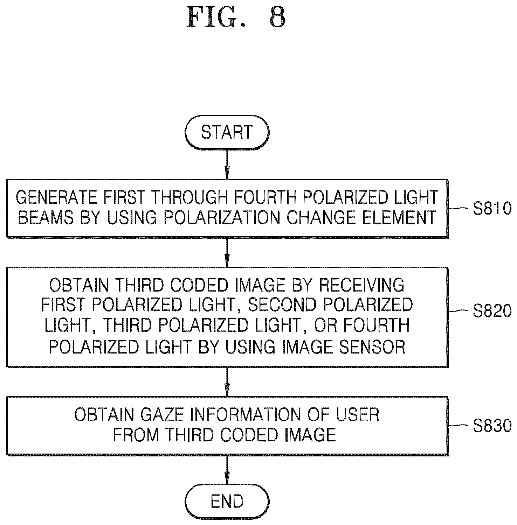

FIG. 8 is a flowchart of a method, performed by an electronic device, of tracking a gaze, based on a plurality of light beams generated using a plurality of light sources and a multiplexed metalens, according to an embodiment of the disclosure.

For convenience of explanation, a repeated description of matters described above with reference to FIG. 3 will be given briefly or omitted.

In operation S810, first through fourth polarized light beams may be generated using a polarization change element. The electronic device may transmit first polarized light by allowing the first light to pass through a polarization filter. The electronic device may transmit the transmitted first polarized light without changes, or may change the transmitted first polarized light into the second polarized light. The electronic device may transmit the third polarized light by allowing the second light to pass through the polarization filter. The electronic device may transmit the transmitted third polarized light without changes, or may change the transmitted third polarized light into fourth polarized light.

According to an embodiment of the disclosure, the electronic device may change the polarization form of the first or third polarized light by using the polarization change element. From the first polarized light, the electronic device may transmit first polarized light having polarization of the first direction without changes, or may generate second polarized light having polarization of the second direction. The electronic device may selectively generate the first polarized light or the second polarized light by controlling the polarization change element.

According to an embodiment of the disclosure, the electronic device may include a first light source and a second light source. The first light source may output first light. The second light source may output second light.

The first light and the second light may be different from each other. A wavelength region of the first light and a wavelength region of the second light may be different from each other. For example, the electronic device may output first light having a wavelength of 850nm by using the first light source, and may output second light having a wavelength of 940nm by using the second light source.

According to an embodiment of the disclosure, the electronic device may generate the third polarized light polarized in one direction by allowing the second light to pass through the polarization filter.

According to an embodiment of the disclosure, the electronic device may transmit third polarized light having polarization of the third direction without changes, or may generate fourth polarized light having polarization of a fourth direction. The electronic device may selectively generate the third polarized light or the fourth polarized light by controlling the polarization change element. For example, the third direction may be the same as the first direction, and the fourth direction may be the same as the second direction.

In operation S820, the electronic device may obtain a third coded image by receiving one of the first through fourth polarized lights by using an image sensor. In operation S830, the electronic device may obtain the gaze information of the user from the third coded image.

According to an embodiment of the disclosure, the electronic device may change the path of one of the first through fourth polarized lights by using a multiplexed metalens. The electronic device may obtain a coded image by receiving one of the first through fourth polarized lights of which paths have been changed. The electronic device may obtain the gaze information of the user from the obtained coded image. The electronic device may track the gage of the user, based on the coded image.

According to an embodiment of the disclosure, the electronic device may obtain a coded image, based on one of the first through fourth polarized lights. The electronic device may determine whether it is possible to obtain the gaze information of the user from the obtained coded image. When the electronic device is able to obtain the gaze information of the user, the electronic device may track the user's gaze from the obtained coded image. However, when the electronic device is unable to obtain the gaze information of the user, the electronic device may re-obtain the coded image, based on another one of the first through fourth polarized lights. The electronic device may obtain the gaze information of the user, based on the re-obtained coded image.

The electronic device may repeat an operation of generating a plurality of coded images, based on the first through fourth polarized lights so that a coded image capable of obtaining the gaze information of the user may be obtained.

According to an embodiment of the disclosure, the coded image may have different shapes according to the optical properties of the first through fourth polarized lights. The optical properties of the first through fourth polarized lights may be different from one another, and coded images obtained based on the first through fourth polarized lights may be different from one another.

For example, the first polarized light and the second polarized light are lights transformed based on the light having a wavelength of 940 nm output by the first light source, and may be light having a wavelength of 940 nm. The third polarized light and the fourth polarized light are lights transformed based on the light having a wavelength of 850 nm output by the second light source, and may be light having a wavelength of 850 nm.

Because the first polarized light and the second polarized light are generated based on the first light output by the same light source, the first polarized light and the second polarized light may be lights of the same wavelength, but may be lights whose polarization directions have been modified differently by the polarization change element. Because the third polarized light and the fourth polarized light are generated based on the second light output by the same light source, the third polarized light and the fourth polarized light may be lights of the same wavelength, but may be lights whose polarization directions have been modified differently by the polarization change element.

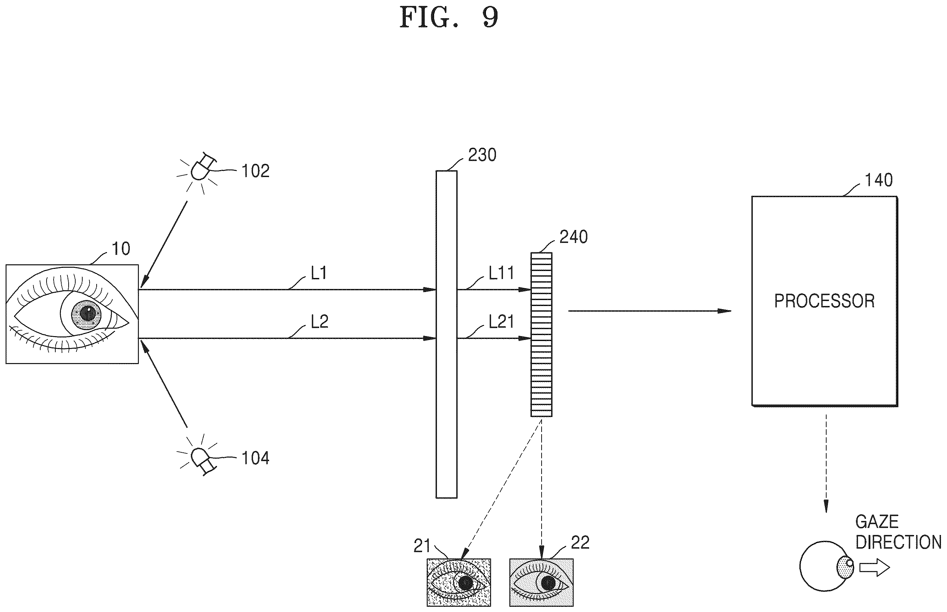

FIG. 9 is a conceptual diagram illustrating an operation, performed by an electronic device, of tracking a gaze, based on a coded image obtained by receiving light output by a plurality of light sources, according to an embodiment of the disclosure. For convenience of explanation, a repeated description of matters described above with reference to FIG. 1 will be given briefly or omitted.

Referring to FIG. 9, the electronic device may include the first light source 102, the second light source 104, a multiplexed metalens 230, an image sensor 240, and a processor 250.

According to an embodiment of the disclosure, the first light source 102 may output the first light L1. The first light source 102 may output the first light L1 toward the object 10. The first light L1 output by the first light source 102 may be reflected by the object 10 located in front of the multiplexed metalens 230.

According to an embodiment of the disclosure, the first polarized light L1 reflected by the object 10 may be transmitted by the multiplexed metalens 230. The electronic device may refract the transmitted first polarized light L1 into different paths according to optical properties, by using the multiplexed metalens 230. The electronic device may change the path of the first polarized light L1 by using the multiplexed metalens 230.

According to an embodiment of the disclosure, the electronic device may obtain a first coded image 21 by receiving first polarized light L11 transmitted by the multiplexed metalens 230, by using the image sensor 240. The electronic device may obtain the first coded image 21 corresponding to the object 10, based on the distribution of the first polarized light L11 transmitted by the multiplexed metalens 230.

According to an embodiment of the disclosure, the electronic device may obtain gaze information of the user from the first coded image 21, by using the processor 250. The electronic device may track the gaze direction of the user according to the gaze information of the user.

According to an embodiment of the disclosure, the second light source 104 may output the second light L2. The second light source 104 may output the second light L2 toward the object 10. The second light L2 output by the second light source 104 may be reflected by the object 10 located in front of the multiplexed metalens 230.

A method, performed by the electronic device, of obtaining a second coded image 22 by using the second light L2 is the same as the method of obtaining the first coded image 21 by using the first light L1, and thus a description thereof will be omitted.

According to an embodiment of the disclosure, the electronic device may obtain gaze information of the user from the second coded image 22 by using the processor 250. The electronic device may track the gaze direction of the user according to the gaze information of the user.

According to an embodiment of the disclosure, the electronic device may obtain the gaze information of the user from the first coded image 21 or the second coded image 22 by using the processor 250. The electronic device may track the gaze direction of the user according to the gaze information of the user.

For example, the electronic device may determine whether it is possible to obtain the gaze information of the user from the first coded image 21. When the electronic device is able to obtain the gaze information of the use from the first coded image 21, the electronic device may track the gaze direction of the user by using the first coded image 21. When the electronic device is unable to obtain the gaze information of the user from the first coded image 21, the electronic device may output the second light L2 by using the second light source 104, and may obtain the second coded image 22, based on the output second light L2. The electronic device may track the gaze direction of the user from the second coded image 22.

The electronic device may re-determine whether it is possible to obtain the gaze information of the user from the second coded image 22. When the electronic device is able to obtain the gaze information of the user from the second coded image 22, the electronic device may track the gaze direction of the user by using the second coded image 22. When the electronic device is unable to obtain the gaze information of the user from the second coded image 22, the electronic device may output third light by using another light source, and may obtain a third coded image, based on the output third light. The electronic device may track the gaze direction of the user from the third coded image.

The electronic device may include three or more light sources, and may repeat an operation of generating a plurality of coded images based on a plurality of light beams so that a coded image capable of obtaining the gaze information of the user may be obtained. The number of light sources does not limit the present disclosure.

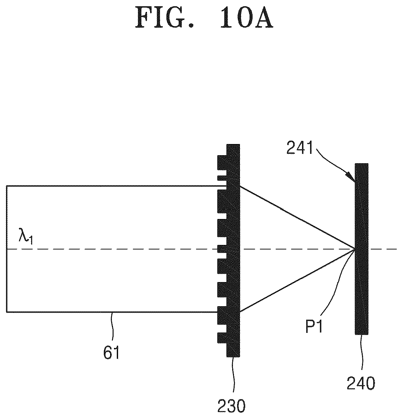

FIG. 10A is a conceptual diagram for explaining an operation in which first light of a first wavelength output by a light source is focused on an image sensor.

According to an embodiment of the disclosure, the electronic device may control a first light source to output first light 61 having a first wavelength λ1. The first light 61 may be reflected by an object and transmitted by the multiplexed metalens 230. The electronic device may change the path of the first light 61 by allowing the first light 61 to pass through the multiplexed metalens 230. After the first light 61 is transmitted by the multiplexed metalens 230, the electronic device may change the path of the first light 61 so that the first light 61 is focused at a first point P1 on an imaging surface 241 of the image sensor 240. The first light 61 whose path has been changed may reach the first point P1 within the imaging surface 241 of the image sensor 240 and may be focused at the first point P1.

For example, the nanostructures of the multiplexed metalens 230 may partially react with a region of the first wavelength λ1 of the first light 61 to change the path of light so that the first light 61 is focused at the first point P1.

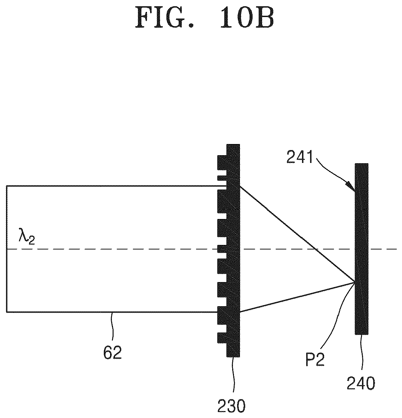

FIG. 10B is a conceptual diagram for explaining an operation in which second light of a second wavelength output by a light source is focused on an image sensor.

According to an embodiment of the disclosure, the electronic device may control a second light source to output second light 62 having a second wavelength λ2. The second light 62 may be reflected by an object and transmitted by the multiplexed metalens 230. The electronic device may change the path of the second light 62 by allowing the second light 62 to pass through the multiplexed metalens 230. After the second light 62 is transmitted by the multiplexed metalens 230, the electronic device may change the path of the second light 62 so that the second light 62 is formed at a second point P2 on the imaging surface 241 of the image sensor 240. The second light 62 whose path has been changed may reaching the second point P2 within the imaging surface 241 of the image sensor 240 and may be focused at the second point P2.

For example, the nanostructures of the multiplexed metalens 230 may partially react with a region of the second wavelength λ2 of the second light 62 to change the path of light so that the second light 62 is focusedat the second point P2.

According to an embodiment of the disclosure, the multiplexed metalens 230 may change the path of transmitted light into different paths according to the wavelength of light. Accordingly, the electronic device may use the multiplexed metalens 230 to change the path of light so that the first light in FIG. 10A is focused at the first point P1, and change the path of light so that the second light in FIG. 10B is focused at the second point P2.

According to an embodiment of the disclosure, unlike in FIGS. 10A and 10B, the electronic device may allow light to pass through the multiplexed metalens 230, thereby changing the path of light so that the light is focused formed outside the imaging surface 241 of the image sensor 240. When the light is focused outside the imaging surface 241, the electronic device may obtain a coded image, based on the light received through the image sensor 240, but may determine that the gaze information of the user is not obtainable from the obtained coded image. Based on the determination, the electronic device may obtain an coded image, based on other light, and may obtain the gaze information of the user from the obtained coded image.

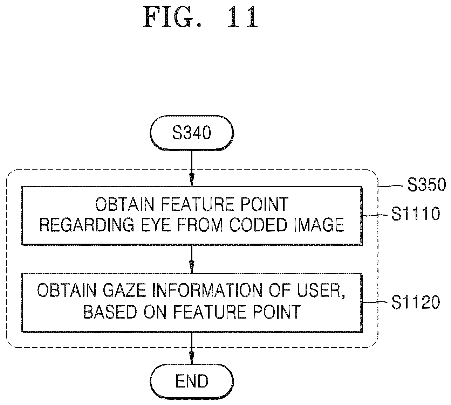

FIG. 11 is a flowchart of a method, performed by an electronic device, of tracking a gaze by extracting a feature point, based on a coded image, according to an embodiment of the disclosure. Operation S350 of FIG. 3 may include operation S1110 and operation S1120.

In operation S1110, the electronic device may obtain a feature point regarding an eye from the coded image.

According to the disclosure, the feature point may refer to a point representing a major feature or a point of interest in an image. For example, a corner where two or more edges detected based on a change in a pixel value intersect each other, and a point where the pixel value is maximum or minimum within the image may be feature points.

The feature point may include information about at least one of a location coordinate or a shape of an image. For example, the feature point may include at least one of a pupil feature point or an eye glint feature point.

According to an embodiment of the disclosure, the electronic device may obtain the feature point from the coded image. The electronic device may obtain the feature point by inputting the obtained coded image to an AI model. The AI model may be a model trained to extract the feature point. The AI model may be a model trained to extract the feature point from a coded image which is obtained based on the lights passing through a multiplexed metalens.

According to an embodiment of the disclosure, the electronic device may obtain the feature point by inputting the first coded image or the second coded image to the AI model. The coded image input to obtain the feature point does not limit the present disclosure.

In operation S1120, the electronic device may obtain the gaze information of the user, based on the feature point.

According to an embodiment of the disclosure, the electronic device may obtain the gaze information of the user, based on the feature point. The electronic device may track the gaze direction of the user, based on the feature point. For example, the electronic device may determine the gaze direction of the user by considering the shape of the pupil, the location of glint coordinates, etc.

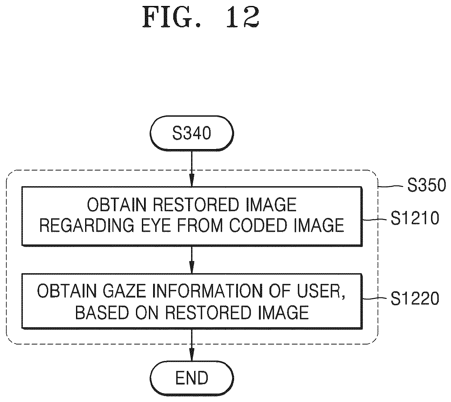

FIG. 12 is a flowchart of a method, performed by an electronic device, of tracking a gaze by restoring an image, based on a coded image, according to an embodiment of the disclosure. Operation S350 of FIG. 3 may include operation S1210 and operation S1220.

In operation S1210, the electronic device may obtain a restored image regarding an eye from the coded image.

The coded image may differ according to at least one of the object by which light is reflected or a pattern shape of the multiplexed metalens. In general, an object expressed in the coded image phase-modulated by the multiplexed metalens may be difficult to identify with the naked eye.

According to an embodiment of the disclosure, the electronic device may obtain the restored image from the coded image. The electronic device may obtain the restored image by inputting the obtained coded image to an AI model. The AI model may be a model trained to restore an image. The AI model may be a model trained to obtain the restored image by restoring the coded image which is obtained based on the lights passing through the multiplexed metalens.

In operation S1220, the electronic device may obtain the gaze information of the user, based on the restored image.

According to an embodiment of the disclosure, the electronic device may obtain the gaze information of the user, based on the restored image. The electronic device may track the gaze direction of the user, based on the restored image. For example, the electronic device may determine the gaze direction of the user by considering, for example, the shape of the pupil within the restored image and the gaze direction within the restored image

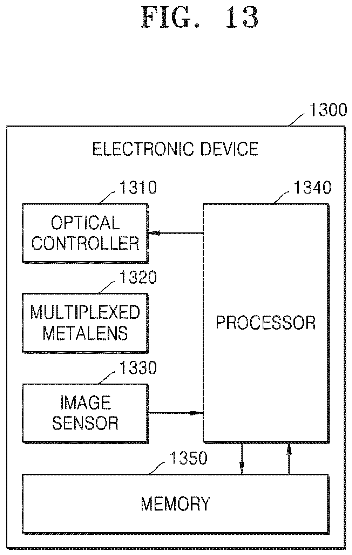

FIG. 13 is a block diagram of a structure of an electronic device 1300 according to an embodiment of the disclosure,

For convenience of explanation, a repeated description of matters described above with reference to FIGS. 1 and 2 will be given briefly or omitted.

The electronic device 1300 may be a device for obtaining an image by receiving light transmitted by a multiplexed metalens 1320, through an image sensor 1330. The electronic device 1300 may be realized as any device, for example, a mobile device, a smartphone, a laptop computer, a desktop computer, a tablet personal computer (PC), a wearable device, an electronic book terminal, a digital broadcasting terminal, a personal digital assistant (PDA), a portable multimedia player (PMP), a navigation device, an MP3 player, or a camcorder. According to an embodiment of the disclosure, the electronic device 1300 may be an augmented reality device. An augmented reality device is a device capable of implementing 'augmented reality', and may include not only augmented reality glasses which are worn on the face of a user, but also a head mounted display (HMD) or augmented reality helmet which is worn on the head of the user.

Referring to FIG. 13, the electronic device 1300 may include an optical controller 1310, the multiplexed metalens 1320, the image sensor 1330, a processor 1340, and a memory 1350. The optical controller 1310, the processor 1340, and the memory 1350 may be electrically and/or physically connected to each other.

The components shown in FIG. 13 are only examples according to an embodiment of the disclosure, and the components included in the electronic device 1300 are not limited to those shown in FIG. 13. The electronic device 1300 may not include some of the components illustrated in FIG. 13, and may further include components not illustrated in FIG. 13. For example, the electronic device 1300 may further include a power supplier (e.g., a battery) supplying driving power to the optical controller 1310, the processor 1340, and the memory 1350.

According to an embodiment of the disclosure, an image sensor 1330 of the disclosure may be used to track an eye gaze. In this case, the image sensor 1330 generally uses an infrared light source. To track an eye gaze by using the image sensor 1330, light of an infrared band output by the infrared light source may be reflected from an eye and transmitted by the multiplexed metalens 1320. The light reflected by the eye and transmitted by the multiplexed metalens 1320 may be received by the image sensor 1330.

The optical controller 1310 may be configured to selectively generate a plurality of light beams having different optical properties.

According to an embodiment of the disclosure, the optical controller 1310 may include a polarization filter and a polarization change element.

The polarization filter may transmit only polarized light PL having a specific polarization among external incident light. The polarization change element may change the phase of a traveling wave when linearly-polarized light is incident perpendicularly upon a plane.

The electronic device 1300 may selectively generate one of a plurality of light beams to have a distinct optical property based on light incident from the outside, by using the optical controller 1310. The light incident from the outside may be polarized in one direction by the polarizing filter.

A phase of the polarized light may be modulated by the polarization change element. The electronic device 1300 may modulate the phase of the polarized light by controlling the polarization change element, and may selectively generate one of the plurality of light beams having different phases according to the degree to which the phase of the polarized light is modulated.

According to an embodiment of the disclosure, the optical controller 1310 may include a first light source and a second light source.

The first light source may output light having a first wavelength. The second light source may output light having a second wavelength. The first wavelength and the second wavelength may be different from each other. For example, the first wavelength may be 850 nm and the second wavelength may be 940 nm.

The electronic device 1300 may selectively generate one of two light beams having different wavelengths, by controlling the first light source and the second light source.

According to an embodiment of the disclosure, the optical controller 1310 may include the first light source, the second light source, the polarization filter, and the polarization change element.

The electronic device 1300 may selectively generate one of first light having the first wavelength and second light having the second wavelength, by controlling the first light source and the second light source.

When the first light is incident, the electronic device may modulate the phase of polarized first light by controlling the polarization filter and the polarization change element, and may selectively generate one of a plurality of first light beams having different phases according to the degree to which the phase of the polarized first light is modulated.

When the second light is incident, the electronic device 1300 may modulate the phase of polarized second light by controlling the polarization filter and the polarization change element, and may selectively generate one of a plurality of second light beams having different phases according to the degree to which the phase of the polarized second light is modulated.

The multiplexed metalens 1320 may be a lens in which relatively small-scale nanostructures are arranged in a 2D manner. The multiplexed metalens 1320 may include a surface formed with nanostructures arranged on a substrate, and the phase of transmitted light may be modulated according to an arrangement of the nanostructures of the multiplexed metalens 1320 and a shape of each of the nanostructures.

The multiplexed metalens 1320 may be configured to refract incident light in different paths according to optical properties. The electronic device 1300 may refract the incident light in each path by using the multiplexed metalens 1320, to thereby adjust a location on which the incident light is focused.

For example, even when the first light refracted by the multiplexed metalens 1320 is not focused within an imaging surface of the image sensor 1330, the electronic device 1300 may obtain a coded image of an object by using the second light refracted by the multiplexed metalens 1320. The electronic device 1300 may obtain the coded image of the object by using a plurality of light beams, when at least one light beam refracted by the multiplexed metalens 1320 forms part of an image within the imaging surface of the image sensor 1330.

Accordingly, the electronic device 1300 may obtain the coded image of the object by using a plurality of light beams, when at least one light beam refracted by the multiplexed metalens 1320 among the plurality of light beams forms part of an image within the imaging surface of the image sensor 1330, and may track an eye gaze of the user, based on the coded image. Because the electronic device 1300 is able to utilize the plurality of light beams, the area of the image sensor 1330 may be minimized, and, when an image of at least one light beam is formed within the imaging surface of the image sensor 1330 having the minimized area, the electronic device may track the user's gaze.

For example, horizontal and vertical lengths of the image sensor 1330 may be reduced, and a width thereof may also be reduced with demands for fewer internal devices. Likewise, the electronic device 1300 including the image sensor 1330, that is, an eye tracking camera system, may be miniaturized. In detail, when the volume of an existing eye tracking camera is 3.2 * 3.2 * 3.9 (mm³), the volume of the eye tracking camera to which the electronic device 1300 according to an embodiment of the disclosure is applied may be 1.6 * 1.6 * 1.5 (mm³).

As the image sensor 1330 becomes smaller, power consumption of the electronic device 1300 may decrease. For example, when the power consumption of an existing eye tracking camera is 85mW, the volume of the eye tracking camera to which the electronic device 1300 according to an embodiment of the disclosure is applied may be 42.5mW. According to an embodiment of the disclosure, the power consumption of the eye tracking camera may be reduced by 50%.

However, this is only an example, and the degree of miniaturization of the image sensor 1330 and the power consumption of the electronic device 1300 do not limit the present disclosure according to the performances required for situations.

The image sensor 1330 is an imaging element configured to obtain a coded image by receiving the light transmitted by the multiplexed metalens 1320, converting luminance or intensity of the received light into an electric signal, and imaging the electric signal. The image sensor 1330 may be realized as, for example, a charge coupled device (CCD) or a complementary metal-oxide semiconductor (CMOS), but is not limited thereto.

The processor 1340 may execute one or more instructions or program codes stored in the memory 1350, and may perform functions and/or operations corresponding to the instructions or program codes. The processor 1340 may include hardware components that perform arithmetic, logic, input/output operations and signal processing. The processor 1340 may include, but is not limited to, at least one of a central processing unit, a microprocessor, a graphics processing unit, an application processor (AP), application specific integrated circuits (ASICs), digital signal processors (DSPs), digital signal processing devices (DSPDs), programmable logic devices (PLDs), or field programmable gate arrays (fPGAs).

The processor 1340 is illustrated as a single element in FIG. 13, but embodiments of the disclosure are not limited thereto. According to an embodiment, the processor 1340 may be provided as one or in plurality.

According to an embodiment of the disclosure, the processor 1340 may be configured as a dedicated hardware chip that performs artificial intelligence (AI) learning.

Instructions and program code readable by the processor 1340 may be stored in the memory 1350. The memory 1350 may include at least one of a flash memory type, a hard disk type, a multimedia card micro type, a card type memory (for example, a secure digital (SD) or extreme digital (XD) memory), a random access memory (RAM), a static random access memory (SRAM), a read-only memory (ROM), an electrically erasable programmable ROM (EEPROM), a programmable ROM (PROM), mask ROM, flash ROM, a hard disk driver (HDD), or a solid state driver (SSD).

The memory 1350 may store instructions or program codes for performing functions or operations of the electronic device 1300. According to an embodiment of the disclosure, at least one of instructions, an algorithm, a data structure, program code, or an application program readable by the processor 1340 may be stored in the memory 1350. The instructions, algorithm, data structure, and program code stored in the memory 1350 may be implemented in, for example, programming or scripting languages such as C, C++, Java, assembler, and the like.

The memory 1350 may store instructions, algorithm, data structure, or program code related to an AI model for obtaining gaze information of a user from a coded image. For example, the memory 1350 may store program code for obtaining feature points or restored images from the coded image and tracking the user's gaze through the feature points or restored images. A module included in the memory 1350 denotes a unit processing a function or operation performed by the processor 1340, and may be implemented as software, such as instructions, algorithm, data structure, or program code.

The processor 1340 may track the user's gaze from the coded image. The processor 1340 may track the user's gaze by using an AI algorithm trained to obtain gaze information of the user from a coded image of which a phase has been modulated by a certain pattern of the multiplexed metalens 1320.

According to an embodiment below, the processor 1340 may be implemented by executing the instructions or program codes stored in the memory 1350.

According to an embodiment of the disclosure, the processor 1340 may obtain a first coded image by receiving first polarized light refracted in a first path by the multiplexed metalens 1320. The processor 1340 may determine whether it is possible to obtain the gaze information of the user from the first coded image. When the processor 1340 is unable to obtain the user's gaze information, based on the determination, the processor 1340 may change the first polarized light transmitted by the polarization filter to second polarized light. The processor 1340 may obtain a second coded image by receiving second polarized light refracted in a second path by the multiplexed metalens 1320. The processor 1340 may obtain the gaze information of the user from the second coded image.

According to an embodiment of the disclosure, when the processor 1340 is able to obtain the user's gaze information based on the determination, the processor 1340 may obtain the user's gaze information from the first coded image.

According to an embodiment of the disclosure, the processor 1340 may re-determine whether it is possible to obtain the gaze information of the user from the second coded image. When the processor 1340 is unable to obtain the user's gaze information, based on the re-determination, the processor 1340 may change the first polarized light transmitted by the polarization filter to third polarized light. The processor 1340 may obtain a third coded image by receiving third polarized light refracted in a third path by the multiplexed metalens 1320. The processor 1340 may obtain the gaze information of the user from the third coded image.

According to an embodiment of the disclosure, the first polarized light may be transmitted by allowing the first light to pass through the polarization filter, and the first polarized light may be transmitted by the polarization change element without changes or the first polarized light transmitted by the polarization change element may be changed into the second polarized light. The third polarized light may be transmitted by allowing the second light to pass through the polarization filter, and the third polarized light may be transmitted by the polarization change element without changes or the third polarized light transmitted by the polarization change element may be changed into the fourth polarized light. The processor 1340 may obtain the third coded image by receiving the polarized light, the second polarized light, the third polarized light, or the fourth polarized light by using the image sensor 1330. The processor 1340 may obtain the gaze information of the user from the third coded image.

According to an embodiment of the disclosure, the processor 1340 may obtain a feature point regarding an eye from the second coded image. The processor 1340 may obtain the gaze information of the user, based on the feature point.

According to an embodiment of the disclosure, the processor 1340 may obtain a restored image regarding an eye from the second coded image. The processor 1340 may obtain the gaze information of the user, based on the restored image.

According to an embodiment of the disclosure, the processor 1340 may obtain a first coded image by receiving, by using the image sensor 1330, first light refracted in a first path by the multiplexed metalens 1320. The processor 1340 may determine whether it is possible to obtain the gaze information of the user from the first coded image. When the processor 1340 is unable to obtain the user's gaze information, based on the determination, the processor 1340 may obtain a second coded image by receiving, by using the image sensor 1330, second light refracted in a second path by the multiplexed metalens 1320. The processor 1340 may obtain the gaze information of the user from the second coded image.

According to an embodiment of the disclosure, when the processor 1340 is able to obtain the user's gaze information based on the determination, the processor 1340 may obtain the user's gaze information from the first coded image.

According to an embodiment of the disclosure, the processor 1340 may re-determine whether it is possible to obtain the gaze information of the user from the second coded image. When the processor 1340 is unable to obtain the user's gaze information, based on the re-determination, the processor 1340 may obtain a third coded image by receiving, by using the image sensor 1330, third light refracted in a third path by the multiplexed metalens 1320. The processor 1340 may obtain the gaze information of the user from the third coded image.

According to an embodiment of the disclosure, the processor 1340 may obtain a feature point regarding an eye from the second coded image. The processor 1340 may obtain the gaze information of the user, based on the feature point.

According to an embodiment of the disclosure, the processor 1340 may obtain a restored image regarding an eye from the second coded image. The processor 1340 may obtain the gaze information of the user, based on the restored image.

The processor 1340 of the electronic device 1300 according to an embodiment of the disclosure may use an Al model trained to obtain the user's gaze information from the coded image. According to an embodiment of the disclosure, the Al model may be a deep neural network model trained according to supervised learning by applying, as input data, a coded image obtained according to a distribution of light simulated based on a multiplexed metalens 1320, and applying, as an output ground truth, a user's gaze corresponding to the coded image. The 'training' may refer to training a neural network so that the neural network discovers or learns by itself a method of analyzing pieces of input data for the neural network, a method of classifying the pieces of input data, and/or a method of extracting a feature necessary for generating result data from the pieces of input data. In detail, through the training, the deep neural network model may optimize weight values in the neural network by learning training data (e.g., a plurality of original images and a plurality of feature points). The deep neural network model outputs a target result by processing the pieces of input data through the neural network having the optimized weight values.

A type of the Al model does not limit the present disclosure, and the Al model may be realized as any one of a convolutional neural network (CNN), a recurrent neural network (RNN), a restricted Boltzmann machine (RBM), a deep belief network (DBN), a bidirectional recurrent deep neural network (BRDNN), and a deep Q-network. The Al model may be subdivided. The CNN may be subdivided into a deep-CNN (DCNN) or a CapsNet neural network.

The processor 1340 may obtain the gaze information of the user from the coded image by using a pre-trained Al model. According to an embodiment of the disclosure, the processor 1340 may input the coded image obtained through the image sensor 1330 to the AI model, and may obtain the gaze information of the user corresponding to the coded image by performing inference using the AI model. For example, the pre-trained AI model may obtain the feature point or restored image corresponding to the coded image, and may obtain the user's gaze information based on the feature point or restored image.

The Al model may be stored in the memory 1350 of the electronic device 1300. However, this is only an example and does not limit the present disclosure. For example, the AI model may be stored in an external server. In this case, the electronic device 1300 may further include a communication interface capable of performing data communication with the external server, and may receive the AI model or result data (e.g., the feature point) inferred by the Al model from the external server through the communication interface. In general, memory storage capacity, a throughput speed, and ability to collect a training data set of the electronic device 1300 may be limited compared to a server. Accordingly, storing of massive data and an operation that require massive throughput may be performed by the server, and then required data and/or the Al model may be transmitted to the electronic device 1300 through the communication network. In this case, the electronic device 1300 may be able to perform a required operation quickly and easily without having to use a large capacity memory and a processor having fast operation capability, by receiving and using the Al model or inference data by the AI model through the server.

The machine-readable storage medium may be provided as a non-transitory storage medium. The 'non-transitory storage medium' is a tangible device and only means that it does not contain a signal (e.g., electromagnetic waves). This term does not distinguish a case in which data is stored semi-permanently in a storage medium from a case in which data is temporarily stored. For example, the non-transitory recording medium may include a buffer in which data is temporarily stored.

According to an embodiment of the disclosure, a method according to various disclosed embodiments may be provided by being included in a computer program product. The computer program product, which is a commodity, may be traded between sellers and buyers. Computer program products are distributed in the form of device-readable storage media (e.g., compact disc read only memory (CD-ROM)), or may be distributed (e.g., downloaded or uploaded) through an application store or between two user devices (e.g., smartphones) directly and online. In the case of online distribution, at least a portion of the computer program product (e.g., a downloadable app) may be stored at least temporarily in a device-readable storage medium, such as a memory of a manufacturer's server, a server of an application store, or a relay server, or may be temporarily generated.

## Claims

1. An electronic device comprising:
a polarization filter configured to receive incident light and to change a polarization of the incident light;
a polarization change element configured to receive light from the polarization filter;
a metalens configured to refract light received from the polarization change element into different paths according to a polarization direction of the light received from the polarization change element;
an image sensor configured to receive the refracted light from the metalens;
at least one processor; and
at least one memory storing at least one instruction that, when executed by the at least one processor, cause the electronic device to:
cause the polarization filter to change the incident light to a first polarized light of a first direction and to transmit the first polarized light,
obtain, through the image sensor, a first coded image based on the first polarized light, wherein the first polarized light is refracted into a first path by the metalens, and
based on identifying that gaze information of a user may not be obtained from the first coded image:
cause the polarization change element to change the first polarized light to a second polarized light of a second direction and transmit the second polarized light,
obtain, through the image sensor, a second coded image based on the second polarized light, wherein the second polarized light is refracted into a second path by the metalens, and
obtain the gaze information of the user from the second coded image.

2. The electronic device of claim 1, wherein the at least one instruction, when executed by the at least one processor, causes the electronic device to:
based on identifying that the gaze information of the user may be obtained from the first coded image, obtain the gaze information of the user from the first coded image.

3. The electronic device of claim 1, wherein the first direction is perpendicular to the second direction.

4. The electronic device of claim 1,
wherein the at least one instruction, when executed by the at least one processor, causes the electronic device to:
based on identifying that the gaze information of the user may not be obtained from the second coded image:
cause the polarization change element to change the first polarized light to a third polarized light of a third direction and transmit the third polarized light,
obtain, through the image sensor, a third coded image based on the third polarized light, wherein the third polarized light is refracted into a third path by the metalens, and
obtain the gaze information of the user from the third coded image.

5. The electronic device of claim 1,
wherein the first coded image is formed by the first polarized light reaching a first point within an imaging surface of the image sensor along the first path, and
wherein the second coded image is formed by the second polarized light reaching a second point within the imaging surface of the image sensor along the second path.

6. The electronic device of claim 1,
wherein the first path does not intersect with an imaging surface of the image sensor, and
wherein the second coded image is formed by the second polarized light reaching the imaging surface of the image sensor along the second path.

7. The electronic device of claim 1, further comprising a first light source configured to output a first light,
wherein the at least one instruction, when executed by the at least one processor, causes the electronic device to:
cause the first polarized light to be transmitted by allowing the first light to pass through the polarization filter.

8. The electronic device of claim 4, further comprising:
a first light source configured to output a first light; and
a second light source configured to output a second light,
wherein the at least one instruction, when executed by the at least one processor, causes the electronic device to:
cause the first polarized light to be transmitted by allowing the first light to pass through the polarization filter or cause the third polarized light to be transmitted by allowing the second light to pass through the polarization filter.

9. The electronic device of claim 8, wherein a wavelength region of the first light and a wavelength region of the second light are different from each other.

10. The electronic device of claim 1, further comprising:
a first light source configured to output a first light; and
a second light source configured to output a second light,
wherein the at least one instruction, when executed by the at least one processor, causes the electronic device to:
cause the first polarized light to be transmitted by allowing the first light to pass through the polarization filter,
cause the polarization change element to transmit the first polarized light or to change the first polarized light to the second polarized light and transmit the second polarized light,
cause a third polarized light of a third direction to be transmitted by allowing the second light to pass through the polarization filter,
cause the polarization change element to transmit the third polarized light or to change the third polarized light to a fourth polarized light of a fourth direction and transmit the fourth polarized light, and
obtain, through the image sensor, the gaze information of the user from a third coded image based on the first polarized light, the second polarized light, the third polarized light, or the fourth polarized light.

11. The electronic device of claim 1, wherein the at least one instruction, when executed by the at least one processor, causes the electronic device to:
obtain a feature point related to an eye from the second coded image, and
obtain the gaze information of the user based on the feature point.

12. The electronic device of claim 1, wherein the at least one instruction, when executed by the at least one processor, causes the electronic device to:
obtain a restored image related to an eye from the second coded image, and
obtain the gaze information of the user based on the restored image.

13. The electronic device of claim 1,
wherein the metalens comprising a surface formed of a plurality of nanostructures arranged on a substrate, wherein the metalens is configured to refract light received from the polarization change element into different paths by modulating a phase of the light received from the polarization change element based on one of a polarization of the light received from the polarization change element and a wavelength of the light received from the polarization change element.

14. The electronic device of claim 1, wherein the metalens is further configured to refract light received from the polarization change element into different paths based on at least one of a size of each nanostructure of the plurality of nanostructures, a shape of each nanostructure of the plurality of nanostructures, and an arrangement of the plurality of nanostructures on the substrate.

15. A method comprising:
obtaining a first coded image by receiving first polarized light refracted into a first path by a metalens, wherein the metalens is configured to refract incident light into different paths according to a polarization direction of the incident light;
identifying whether gaze information of a user may be obtained from the first coded image;
based on identifying that the gaze information of the user may not be obtained from the first coded image: obtaining a second coded image by receiving second polarized light refracted into a second path by the metalens; and
obtaining the gaze information of the user from the second coded image.
